# EUROPEAN PATENT APPLICATION

(11) **EP 3 400 790 A1**
(43) Date of publication of application: **14.11.2018**
(21) Application number: 18171439.5
(22) Date of filing: 09.05.2018
(51) Int. Cl.: A01G 24/28, A01G 24/44

(54) **SUBSTRATE FOR THE CULTIVATION OF PLANTS**

(30) Priority: 09.05.2017 NL 2018875
(71) Applicant: Van der Knaap Diensten B.V., 2295 RZ Kwintsheul (NL)
(72) Inventor: de Bruijn, Carolus Wilhelmus Maria, 2681 RW Monster (NL); van der Knaap, Petrus Johannes Jacobus, 2675 SH Honselersdijk (NL)
(74) Representative: Knaapen-Arts, Kelly Lysanne

(57) **Abstract**

The present invention relates to a substrate for cultivating plants comprising a gel-forming polymer such that the composition of the substrate does not need to comprise German black peat. The invention further relates to a method for producing the substrate, a pressed pot or plug comprising the substrate, the use of a gel-forming polymer in a substrate for the cultivation of plants, and a method for cultivating plants.

## Description

The present invention relates to a substrate for cultivating plants, a method for producing the substrate, a pressed pot or plug comprising the substrate, the use of a gel-forming polymer in a substrate for the cultivation of plants, and a method for cultivating plants.

In the cultivation of plants, plant growers use substrates as a medium in which they cultivate plants. Such substrates include organic and/or inorganic materials, such as for instance peat, cocopeat, perlite, and rockwool. Substrates provide a rooting climate and may be composed of different materials depending on its purpose. The choice of materials determines the air/water ratio available to growing roots.

Commonly used products comprising substrates include pressed pots, glue pots and plugs. A pressed pot is a rooting substrate usually based on German black peat and milled peat, which is pressed after adding water. German black peat is sticky, which ensures that the pressed pots retain their compact form. Pressed pots are often used for rooting chrysanthemums and propagating lettuce and other leafy vegetables. Glue plugs consist mainly of pressed white peat with perlite and an organic binder, such as polyurethane. Glue plugs are solid and suitable for rooting quick-rooting cuttings, as this requires a sufficient amount of air and water in the plugs. Plugs can be controlled well, ensure fast rooting, optimal root development, and can be planted quickly.

One of the main components of substrates, and especially of pressed substrates, is black peat. The type of black peat that is very suitable for growing plants in pressed substrates is German black peat, as it is sticky and therefore holds the substrate together without the need for a binder. German black peat is, however, becoming increasingly scarce.

The present alternative of using German black peat would be to use another type of peat in combination with a binder such as polyurethane. Polyurethane, however, comprises the toxic isocyanate and is expected to become prohibited by European regulations in the near future.

It is therefore an object of the present invention to provide a substrate that is not based on German black peat or comprises polyurethane. This object is met by the provision of a substrate comprising a gel-forming polymer which binds the components of the substrate together, wherein the gel-forming polymer is a polymer not previously known to be applicable in substrates for cultivating plants.

The invention therefore relates to a substrate for cultivating plants comprising a gel-forming polymer, wherein the gel-forming polymer is selected from the group consisting of the natural gel-forming polymers collagen, gelatine, starch, alginate and agarose, and polyvinylidene fluoride (PVDF), polyethylene oxide, polyacrylonitrile, polymethylmethacrylate, (poly)acrylamide, acrylic acid, polyvinyl acetate, polyvinylpyrrolidinone, polytetraethylene glycol diacrylate, copolymers of any of the foregoing, and combinations thereof.

The substrate may comprise any substrate suitable for cultivating plants, such as peat, in particular black peat, white peat and/or cocopeat, cocofibres and/or perlite. The substrate may or may not comprise sticky components, such as for instance German black peat. Soil or earth may also be present in the substrate, however, preferably only in small amounts.

The gel-forming polymers are in particular suitable as binders in pressed substrates. Therefore, in an embodiment of the present invention, the substrate is a pressed substrate. The pressed substrate may for instance be, or be part of, a pressed pot or a plug. The present invention thus also relates to a pressed pot or plug for cultivating plants, comprising the substrate of the invention.

The inventors have surprisingly found that polyacrylamide is particularly suitable as a component of the substrate. A copolymer of acrylamide and acrylic acid will have the same effect. Therefore, in an embodiment of the present invention, the gel-forming polymer is polyacrylamide or acrylamide/acrylic acid copolymer.

Acrylamide (or acrylic amide) is a chemical compound with the chemical formula C₃H₅NO. Its IUPAC name is prop-2-enamide. It is a white odorless crystalline solid, soluble in water, ethanol, ether, and chloroform. Acrylamide can be prepared by the hydrolysis of acrylonitrile by nitrile hydratase. In industry, most acrylamide is used to synthesize polyacrylamides, which find many uses as water-soluble thickeners. These include use in wastewater treatment, gel electrophoresis (SDS-PAGE), papermaking, ore processing, tertiary oil recovery, and the manufacture of permanent press fabrics. Some acrylamide is used in the manufacture of dyes and the manufacture of other monomers.

Acrylic acid is an organic compound with the formula CH₂=CHCO₂H. Its IUPAC name is prop-2-enoic acid. It is the simplest unsaturated carboxylic acid, consisting of a vinyl group connected directly to a carboxylic acid terminus. This colourless liquid has a characteristic acrid or tart smell. It is miscible with water, alcohols, ethers, and chloroform. Acrylic acid is produced from propylene which is a byproduct of ethylene and gasoline production.

CH₂=CHCH₃ + 3/2 O₂ → CH₂=CHCO₂H + H₂O

Ethylene can be carboxylated to acrylic acid under supercritical carbon dioxide condition. Acrylic acid and its esters readily combine with themselves (to form polyacrylic acid) or with other monomers (e.g. acrylamides, acrylonitrile, vinyl, styrene, and butadiene) by reacting at their double bond, thereby forming homopolymers or copolymers.

Acrylamide, polyacrylamide, acrylic acid, and acrylamide /acrylic acid copolymer are readily available trough several commercial suppliers.

Polyacrylamide and acrylamide/acrylic acid copolymer hold, or stick, the components of the substrate together when water is applied. As such, it is possible to mix the polyacrylamide or acrylamide/acrylic acid copolymer with the other components in dry state and store, transport and/or sell it loose, for instance in trays, as well as in bags. Before use, a plant grower only has to add water to bind the substrate together such that it can be used to cultivate plants.

The advantage of using polyacrylamide or a copolymer of acrylamide and acrylic acid as a binder in pressed substrates is that only very low amounts need to be used. An amount as low as 100 g per m³ is sufficient to obtain a substrate that after pressing holds its shape. As a comparison, an amount of about 10-15 kg per m³ of polyurethane is usually needed to produce substrate for pressed pots or plugs. The amount of polyacrylamide or a copolymer of acrylamide and acrylic acid may of course be adjusted as desired for obtaining a substrate that is more or less sticky, depending on its intended purpose. An amount of 1000 g per m3 will still produce a substrate suitable for cultivating plants. Therefore, in an embodiment of the present invention, the gel-forming polymer is present in an amount of 100-1000 g per m³ substrate, preferably in an amount of 200-1000 g per m³ substrate, more preferably in an amount of 200-750 g per m³ substrate, and most preferably in an amount of 200-500 g per m³ substrate.

The present invention further relates to a method for producing a substrate for cultivating plants, comprising:
a) mixing a substrate or a combination of different substrates for cultivating plants with a gel-forming polymer selected from the group consisting of the natural gel-forming polymers collagen, gelatine, starch, alginate and agarose, and polyvinylidene fluoride (PVDF), polyethylene oxide, polyacrylonitrile, polymethylmethacrylate, polyacrylamide, polyvinyl acetate, polyvinylpyrrolidinone, polytetraethylene glycol diacrylate, copolymers of any of the foregoing, and combinations thereof;
b) adding water to hydrate the mixture obtained in step a);
c) pressing the hydrated mixture obtained in step b) to obtain a pressed substrate.

The substrate or combination of different substrates may comprise peat, in particular black peat, white peat, cocopeat, cocofibres and/or perlite. Soil or earth may also be present in the substrate, however, preferably only in small amounts.

In an embodiment of the present invention, 100-1000 g of the gel-forming polymer is mixed with 1 m³ substrate.

In a further embodiment of the present invention, the gel-forming polymer is polyacrylamide or acrylamide/acrylic acid copolymer.

A sufficient amount of water is added to the mixture of substrate and gel-forming polymer, such that a moisture content of between 70-90% is obtained. Preferably, a moisture content of between 73-82% is obtained, more preferably about 78.3%.

The pressed substrate may subsequently be dried to a preferred moisture content, such as for instance 70%.

In practice, the resulting substrate will be further dried before use. For example, watering is being put on hold several days before planting Chrysanthemums as this further increases the strength of the substrate and allows for automated handling.

The present invention also relates to the use of polyacrylamide or acrylamide/acrylic acid copolymer in a substrate for cultivating plants, and especially in a substrate comprising peat, in particular black peat, white peat, cocopeat, cocofibres and/or perlite.

The present invention further relates to a method for cultivating a plant, comprising cultivating a plant on the substrate of the invention or the pressed pot or plug of the invention.

The term cultivating encompasses all steps normally taken to produce a plant, such as the sowing of seed, the planting of seedlings or cuttings, and/or the growing of a plant from the seed, seedlings or cuttings. The substrate or pressed pot or plug of the present invention may be used for all these steps or for part of the steps. A plant grower can for instance use the substrate of the present invention or pressed pot or plug of the present invention for sowing seeds and growing seedlings from these seeds and then plant the seedlings in a similar or in a different substrate or in soil.

### EXAMPLE

Pressed pots comprising different compositions were prepared and characterised with respect to bulk density, volume, change in volume after pressing, air content, force at breaking point and pressure at breaking point.

Pressed pot 1 was prepared by mixing 80% German black peat with 20% Baltic white peat. This pressed pot was used as a control.

Pressed pot 2 was prepared by mixing 50% Baltic black peat with 50% Baltic white peat and 200 g polyacrylamide.

Water was added to these mixtures to obtain mixtures having a moisture content of 78.3%. The mixtures were subsequently pressed into pots of 4x4x3.5 cm using a compression factor of 1.1.

The pressed pots were subsequently dried back to about 70% moisture content and characterised with respect to bulk density, volume, change in volume after pressing, air content, force at breaking point and pressure at breaking point. The results are shown in Table 1.

**Table 1**

| | Pressed pot 1 | Pressed pot 2 |
|---|---|---|
| Bulk density (g/l) | 243 | 249 |
| Volume (ml) | 41 | 41 |
| Change in volume after pressing (%) | 7 | 7 |
| Air content (%-v) | 28 | 27 |
| Force at breaking point (N) | 26 | 13 |
| Pressure at breaking point (kPa) | 168 | 85 |

A pressed pot with an initial moisture content of about 80% having a pressure at breaking point higher than 80 kPa is considered as a commercially acceptable pressed pot. The above results thus show that German black peat can successfully be substituted with a non-sticky type of peat, such as Baltic black peat, if acrylamide is being added.

## Claims

1. Substrate for cultivating plants comprising a gel-forming polymer, wherein the gel-forming polymer is selected from the group consisting of the natural gel-forming polymers collagen, gelatine, starch, alginate and agarose, and polyvinylidene fluoride (PVDF), polyethylene oxide, polyacrylonitrile, polymethylmethacrylate, polyacrylamide, polyvinyl acetate, polyvinylpyrrolidinone, polytetraethylene glycol diacrylate, copolymers of any of the foregoing, and combinations thereof.

2. Substrate according to claim 1, wherein the substrate comprises peat, in particular non-sticky black peat, white peat and/or cocopeat, cocofibres and/or perlite.

3. Substrate according to claim 1 or 2, wherein the substrate is a pressed substrate.

4. Substrate according to any one of claims 1-3, wherein the gel-forming polymer is polyacrylamide or acrylamide/acrylic acid copolymer.

5. Substrate according to any one of claims 1-4, wherein the gel-forming polymer is present in an amount of 100-1000 g per m³ substrate.

6. Pressed pot or plug for cultivating plants, comprising the substrate as claimed in any one of claims 1-5.

7. Method for producing a substrate for cultivating plants, comprising:
a) mixing a substrate or a combination of different substrates for cultivating plants with a gel-forming polymer selected from the group consisting of the natural gel-forming polymers collagen, gelatine, starch, alginate and agarose, and polyvinylidene fluoride (PVDF), polyethylene oxide, polyacrylonitrile, polymethylmethacrylate, polyacrylamide, polyvinyl acetate, polyvinylpyrrolidinone, polytetraethylene glycol diacrylate, copolymers of any of the foregoing, and combinations thereof;
b) adding water to hydrate the mixture obtained in step a);
c) pressing the hydrated mixture obtained in step b) to obtain a pressed substrate.

8. Method according to claim 7, wherein the substrate is selected from the group consisting of peat, in particular non-sticky black peat, white peat and/or cocopeat, cocofibres and perlite.

9. Method according to claim 7 or 8, wherein 100-1000 g of the gel-forming polymer is mixed with 1 m³ substrate.

10. Method according to any one of claims 7-9, wherein the gel-forming polymer is polyacrylamide or acrylamide/acrylic acid copolymer.

11. Use of polyacrylamide or acrylamide/acrylic acid copolymer in a substrate for cultivating plants.

12. Use according to claim 11, wherein the substrate comprises peat, in particular non-sticky black peat, white peat and/or cocopeat, cocofibres and/or perlite.

13. Method for cultivating a plant, comprising cultivating a plant on the substrate as claimed in any one of claims 1-5, or the pressed pot or plug as claimed in claim 6.
